# EUROPEAN PATENT APPLICATION

(11) **EP 4 729 327 A1**
(43) Date of publication of application: **22.04.2026**
(21) Application number: 25207686.4
(22) Date of filing: 09.10.2025
(51) Int. Cl.: B60K 23/08, B60W 50/00

(54) **METHOD, APPARATUS, CONTROLLER, AND PRODUCT FOR TORQUE VECTORING OF A VEHICLE**

(30) Priority: 21.10.2024 CN 202411471549
(71) Applicant: Robert Bosch GmbH, 70442 Stuttgart (DE)
(72) Inventor: LI, Chen, Wuxi, Jiangsu, 214000 (CN); JIA, Yunlong, Wuxi, Jiangsu, 214000 (CN); NI, Fanfan, Wuxi, Jiangsu, 214000 (CN)

(57) **Abstract**

The present disclosure relates to a method, apparatus, controller, and product for torque vectoring of a vehicle. The method comprises determining a predicted speed of the vehicle based on the location of the vehicle, the location of a destination, and route information from the location of the vehicle to the location of the destination. The method further comprises acquiring a pre-calibrated mapping relationship between torque vectoring and energy consumption, where the mapping relationship indicates a plurality of torque vectoring ratios of a first drive axle and a second drive axle at a given speed and a plurality of energy consumptions corresponding to the plurality of torque vectoring ratios. In addition, the method further comprises determining a target torque vectoring ratio between the first drive axle and the second drive axle of the vehicle based on the predicted speed and the mapping relationship. In this way, the torque vectoring ratio can be dynamically determined for a particular scenario having a fixed route, thereby reducing the energy consumption of the vehicle in that particular scenario, which can reduce operating costs, increase operating efficiency, and reduce charging times.

## Description

### Technical Field

The present disclosure relates to the field of vehicle control, and more particularly, to a method, apparatus, controller, and product for torque vectoring of a vehicle.

### Background

Some heavy-duty new energy vehicles can be equipped with two motors, which are located at the two axles of the vehicle, giving the vehicle two drive axles. The dual drive axles working together can provide greater driving force, especially when the load is heavy, when climbing a slope, or in harsh road conditions, and can provide sufficient driving force for the vehicle. For example, in scenarios such as mines and construction sites, vehicles carrying heavy objects require strong traction to overcome rugged terrain and steep slopes. The dual drive axle can ensure that the vehicle can drive normally in these scenarios.

The dual drive axles allow the vehicle to distribute torque to two drive axles according to different road conditions and driving requirements. For example, when driving on a curve, the vehicle control system can adjust the torque vectoring ratio between the center axle and the rear axle to improve the vehicle's stability and handling. When one drive axle slips, more torque can be distributed to the other drive axle to ensure that the vehicle continues to move forward, enhancing the vehicle's passability.

### Summary of the Invention

In a first aspect of examples of the present disclosure, a method for torque distribution of a vehicle is provided, the vehicle comprising a first drive axle and a second drive axle, the first drive axle being closer to the rear of the vehicle than the second drive axle. The method comprises determining a predicted speed of the vehicle based on the location of the vehicle, the location of a destination, and route information from the location of the vehicle to the location of the destination. The method further comprises acquiring a pre-calibrated mapping relationship between torque vectoring and energy consumption, where the mapping relationship indicates a plurality of torque vectoring ratios of a first drive axle and a second drive axle at a given speed and a plurality of energy consumptions corresponding to the plurality of torque vectoring ratios. In addition, the method further comprises determining a target torque vectoring ratio between the first drive axle and the second drive axle of the vehicle based on the predicted speed and the mapping relationship.

In a second aspect of examples of the present disclosure, an apparatus for torque distribution of a vehicle is provided, the vehicle comprising a first drive axle and a second drive axle, the first drive axle being closer to the rear of the vehicle than the second drive axle. The apparatus comprises a route information usage unit configured to determine a predicted speed of the vehicle based on the location of the vehicle, the location of a destination, and route information from the location of the vehicle to the location of the destination. The apparatus further comprises a mapping relationship acquisition unit configured to acquire a pre-calibrated mapping relationship between torque vectoring and energy consumption, where the mapping relationship indicates a plurality of torque vectoring ratios of a first drive axle and a second drive axle at a given speed and a plurality of energy consumptions corresponding to the plurality of torque vectoring ratios. In addition, the apparatus further comprises a torque vectoring determination unit configured to determine a target torque vectoring ratio between the first drive axle and the second drive axle of the vehicle based on the predicted speed and the mapping relationship.

In a third invention of examples of the present disclosure, a controller is provided. The controller comprises one or more processors; and a storage device for storing one or more programs, that, when executed by the one or more processors, enable the one or more processors to implement a method for torque vectoring of a vehicle. The vehicle comprises a first drive axle and a second drive axle, the first drive axle being closer to the rear of the vehicle than the second drive axle. The method comprises determining a predicted speed of the vehicle based on the location of the vehicle, the location of a destination, and route information from the location of the vehicle to the location of the destination. The method further comprises acquiring a pre-calibrated mapping relationship between torque vectoring and energy consumption, where the mapping relationship indicates a plurality of torque vectoring ratios of a first drive axle and a second drive axle at a given speed and a plurality of energy consumptions corresponding to the plurality of torque vectoring ratios. In addition, the method further comprises determining a target torque vectoring ratio between the first drive axle and the second drive axle of the vehicle based on the predicted speed and the mapping relationship.

In a fourth aspect of examples of the present disclosure, a computer program product is provided. The computer program product is tangibly stored on a non-transitory computer readable medium and comprises machine executable instructions that, when executed, cause a machine to implement a method for torque vectoring of a vehicle. The vehicle comprises a first drive axle and a second drive axle, the first drive axle being closer to the rear of the vehicle than the second drive axle. The method comprises determining a predicted speed of the vehicle based on the location of the vehicle, the location of a destination, and route information from the location of the vehicle to the location of the destination. The method further comprises acquiring a pre-calibrated mapping relationship between torque vectoring and energy consumption, where the mapping relationship indicates a plurality of torque vectoring ratios of a first drive axle and a second drive axle at a given speed and a plurality of energy consumptions corresponding to the plurality of torque vectoring ratios. In addition, the method further comprises determining a target torque vectoring ratio between the first drive axle and the second drive axle of the vehicle based on the predicted speed and the mapping relationship.

According to a fifth aspect of the present disclosure, a vehicle is provided. The vehicle comprises a controller provided according to the third aspect of the present disclosure.

In a sixth aspect of the present disclosure, a computer-readable storage medium is provided. The computer-readable storage medium has computer-executable instructions stored thereon, wherein the computer-executable instructions are executed by a processor to implement the method provided according to the first aspect of the present disclosure.

It will be understood that the content described in the Summary of the Invention is not intended to limit key or important features of the examples of the present disclosure, nor is it intended to limit the scope of the present disclosure. Other features of the present disclosure will become readily understood by the following description.

### Brief Description of the Drawings

Above and other features, advantages and aspects of various examples of the present disclosure will become more apparent in combination with the accompanying drawings and with reference to the following detailed description. In the accompanying drawings, like or similar accompanying drawings designate like or similar elements, wherein:
FIG. 1 shows a schematic diagram of an example environment in which a plurality of examples of the present disclosure may be implemented;
FIG. 2 shows a flow chart of a method for torque vectoring of a vehicle according to some examples of the present disclosure;
FIG. 3 shows a schematic diagram of an example of determining a torque vectoring ratio in consideration of vehicle weight, grade, and requested torque according to some examples of the present disclosure;
FIG. 4 shows a schematic diagram of an example of determining a predicted speed of a vehicle based on vehicle weight, grade, requested torque, current location, route information, and destination location according to some examples of the present disclosure;
FIG. 5 shows a flow chart of an example process of adopting different torque vectoring strategies for various situations according to some examples of the present disclosure;
FIG. 6 shows a flow chart of an example process for performing a dynamic torque vectoring strategy according to some examples of the present disclosure;
FIG. 7 shows a block diagram of an apparatus for torque vectoring of a vehicle according to some examples of the present disclosure; and
FIG. 8 is a block diagram of a controller that may implement a plurality of examples of the present disclosure.

### Detailed Description of the Embodiments

The examples of the present disclosure will be described in further detail below with reference to the accompanying drawings. While certain examples of the present disclosure are shown in the accompanying drawings, it should be understood that the present disclosure may be implemented in various forms and should not be construed as being limited to the examples set forth herein, rather these examples are provided for a more thorough and complete understanding of the present disclosure. It will be understood that the accompanying drawings and examples of the present disclosure are for exemplary purposes only and are not intended to limit the scope of protection of the present disclosure, and the examples of the present disclosure that are described below with reference to the accompanying drawings are for illustrative purposes only.

Requested torque refers to the torque demand signal sent by the vehicle control unit to the motor. For example, the vehicle control unit can adjust the requested torque in real time according to driving conditions, acceleration requirements, road conditions, and vehicle load to optimize power output and energy consumption. In a vehicle with dual drive axles, the requested torque may be distributed to the two drive axles in different proportions. For example, the requested torque may be distributed evenly to both drive axles, or 60% of the requested torque may be distributed to one drive axle and the remaining 40% may be distributed to the other drive axle, etc.

Different torque vectoring ratios result in different energy consumption. For example, distributing torque equally between the two drive axles can improve driving force and stability in some situations, but may result in unnecessary energy consumption when the load is light or at low speed. In some scenarios, prioritizing torque to the rear or front drive axles can reduce energy consumption. In some related techniques, comprehensive evaluation and optimization can be performed for all operating conditions (e.g., including highways, urban roads, and suburban roads) to ensure that energy consumption performance at different speeds is relatively balanced. Such a solution can improve the overall energy consumption performance of the vehicle in all operating scenarios.

However, in some specific scenarios with fixed routes, such as ports, docks, etc., vehicles typically travel at medium or low speeds, where full-operating-condition optimization may no longer be effective. If a vehicle's usage scenarios are primarily concentrated in medium and low speed scenarios and the full-operating-condition optimization is not fine-tuned for these specific conditions, continued use of full-operating-condition optimization may result in the vehicle failing to achieve optimal energy consumption performance when primarily traveling at medium or low speeds. In other words, in these particular operating conditions, the torque vectoring strategy in related technologies is unable to fully realize the energy efficiency potential of the vehicle.

To this end, examples of the present disclosure present a solution for torque vectoring of a vehicle. In this solution, the vehicle comprises a first drive axle and a second drive axle, the first drive axle being closer to the rear of the vehicle than the second drive axle. The control unit of the vehicle can determine a predicted speed of the vehicle based on the location of the vehicle, the location of a destination, and route information from the location of the vehicle to the location of the destination. In addition, the control unit can acquire a pre-calibrated mapping relationship between torque vectoring and energy consumption, where the mapping relationship indicates a plurality of torque vectoring ratios of a first drive axle and a second drive axle at a given speed and a plurality of energy consumptions corresponding to the plurality of torque vectoring ratios. The control unit can then determine a target torque vectoring ratio between the first drive axle and the second drive axle of the vehicle based on the predicted speed and the mapping relationship.

In this way, the torque vectoring ratio can be dynamically determined for a particular scenario having a fixed route, thereby reducing the energy consumption of the vehicle in that particular scenario, which can reduce operating costs, increase operating efficiency, and reduce charging times.

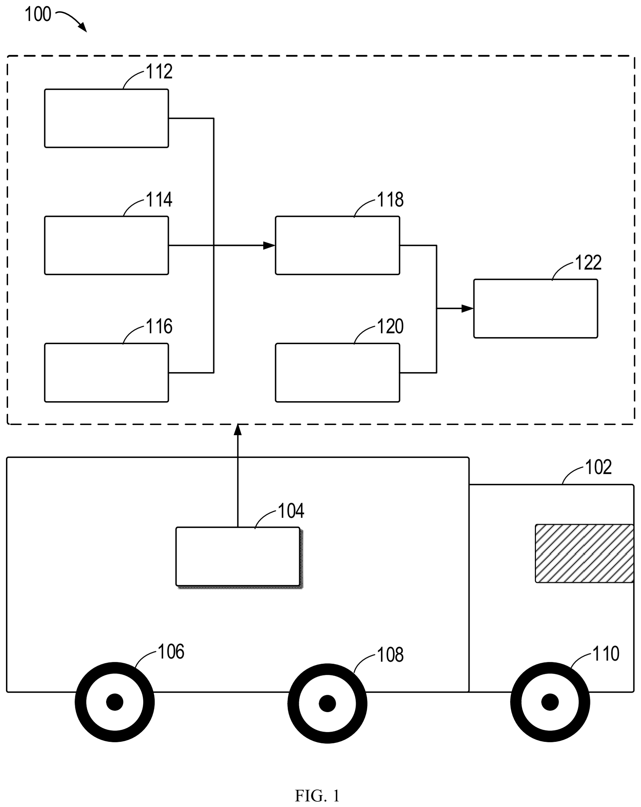

FIG. 1 shows a schematic diagram of an example environment 100 in which a plurality of examples of the present disclosure may be implemented. As shown in FIG. 1, the environment 100 comprises a vehicle 102 that comprises a control unit 104, a rear axle 106, a middle axle 108, and a front axle 110. The control unit 104 may be any control unit of the vehicle 102, e.g., the control unit 104 may be a vehicle control unit, a motor control unit, or a control unit of any subsystem of the vehicle 102. In the example shown in the environment 100, the rear axle 106 and the middle axle 108 are two drive axles configured with motors. It should be understood that in other examples, the two drive axles may also be the rear axle 106 and the front axle 110, or the middle axle 108 and the front axle 110. In other examples, the vehicle 102 may also comprise more or fewer axles, any two of which are drive axles.

In the environment 100, the control unit 104 may acquire the current location 112 of the vehicle 102, the destination location 114, and route information 116 from the current location 112 to the destination location 114. In some examples, the route information 116 may comprise a route for the vehicle to travel from the current location 112 to the destination location 114 such that the control unit 104 may determine a distance or estimated time from the current location 112 of the vehicle to the destination location 114 based on the route. In some examples, the route information 116 may further comprise information such as traffic lights, speed limits, speed bump placement, road type (e.g., suburban road, port internal road, etc.), weather, etc.

In the environment 100, the control unit 104 may determine a predicted speed 118 of the vehicle 102 based on the current location 112 of the vehicle, the destination location 114, and the route information 116. For example, when the control unit 104 determines that the current location 112 of the vehicle is less than a predetermined distance threshold from the destination location 114, it may be predicted that the vehicle will decelerate. As another example, when the vehicle 102 approaches a red light or a speed bump, it may be predicted that the vehicle's speed will decrease to a smaller value. In some examples, the control unit 104 may determine the predicted speed 118 based on historical vehicle speeds near the destination location 114. In some examples, the control unit 104 may acquire the current driving state parameters of the vehicle 102 from the sensors, utilize a kinematic formula to calculate the speed of the vehicle, and then use the current location 112 of the vehicle, the destination location 114, and the route information 116 to adjust the calculated speed to determine the predicted speed 118.

In some examples, the control unit 104 may acquire a pre-built speed prediction model. The speed prediction model may receive the current location 112 of the vehicle, the destination location 114, and the route information 116 as inputs to output the predicted speed 118. In some examples, the speed prediction model may be a regression model constructed based on historical data. In some examples, the speed prediction model may be a trained machine learning model that may extract feature information from the current location 112 of the vehicle, the destination location 114, and the route information 116 and generate a predicted speed 118 based on the feature information.

In the environment 100, after determining the predicted speed 118, the control unit 104 may obtain a pre-calibrated mapping relationship 120 between torque vectoring and energy consumption. The mapping relationship 120 may, for example, indicate a plurality of torque vectoring ratios for two drive axles at a given speed and a plurality of energy consumptions corresponding to the torque vectoring ratios. For example, the mapping relationship 120 may be a dual drive axle energy consumption test table, which may comprise a plurality of entries, each of which may comprise a requested torque, a vehicle speed, a torque vectoring ratio for two drive axles, and energy consumption. In this way, in the dual drive axle energy consumption test table, a plurality of sets of torque vectoring ratios and corresponding energy consumptions can be found based on the requested torque and speed.

In the environment 100, the control unit 104 may determine a target torque vectoring ratio 122 to be distributed based on the predicted speed 118 and the mapping relationship 120. For example, the control unit 104 may search the mapping relationship 120 for a plurality of sets of torque vectoring ratios and corresponding energy consumptions corresponding to the predicted speed 118 and determine the torque vectoring ratio with the minimum energy consumption as the target torque vectoring ratio 122. The control unit 104 may then distribute torque to two drive axles (e.g., the rear axle 106 and the middle axle 108) based on the target torque vectoring ratio 122 to drive the vehicle 102.

In this way, the torque vectoring ratio can be dynamically determined for a particular scenario having a fixed route, thereby reducing the energy consumption of the vehicle in that particular scenario, which can reduce operating costs, increase operating efficiency, and reduce charging times.

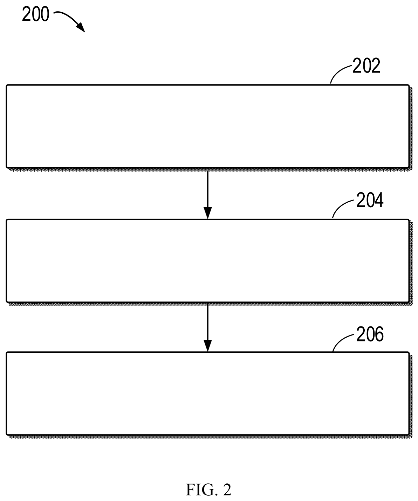

FIG. 2 shows a flow chart of a method 200 for torque vectoring of a vehicle according to some examples of the present disclosure. The method 200 may be performed, for example, by a control unit 104 in the environment 100 shown in FIG. 1. As shown in FIG. 2, in block 202, the control unit of the vehicle can determine a predicted speed of the vehicle based on the location of the vehicle, the location of a destination, and route information from the location of the vehicle to the location of the destination. For example, in the environment 100 shown in FIG. 1, the control unit 104 of the vehicle 102 may determine a predicted speed 118 of the vehicle 102 based on the current location 112 of the vehicle, the destination location 114, and the route information 116. For example, when the control unit 104 determines that the current location 112 of the vehicle is less than a predetermined distance threshold from the destination location 114, it may be predicted that the vehicle will decelerate. As another example, when the vehicle 102 approaches a red light or a speed bump, it may be predicted that the vehicle's speed will decrease to a smaller value.

In block 204, the control unit can acquire a pre-calibrated mapping relationship between torque vectoring and energy consumption, where the mapping relationship indicates a plurality of torque vectoring ratios of a first drive axle and a second drive axle at a given speed and a plurality of energy consumptions corresponding to the plurality of torque vectoring ratios. For example, in the environment 100 as shown in FIG. 1, the control unit 104, after determining the predicted speed 118, may acquire a pre-calibrated mapping relationship 120 between torque vectoring and energy consumption. The mapping relationship 120 may, for example, indicate a plurality of torque vectoring ratios for two drive axles at a given speed and a plurality of energy consumptions corresponding to the torque vectoring ratios. For example, the mapping relationship 120 may be a dual drive axle energy consumption test table, which may comprise a plurality of entries, each of which may comprise a requested torque, a vehicle speed, a torque vectoring ratio for two drive axles, and energy consumption. In this way, in the dual drive axle energy consumption test table, a plurality of sets of torque vectoring ratios and corresponding energy consumptions can be found based on the requested torque and speed.

In block 206, the control unit can then determine a target torque vectoring ratio between the first drive axle and the second drive axle of the vehicle based on the predicted speed and the mapping relationship. For example, in the environment 100 shown in FIG. 1, the control unit 104 may determine a target torque vectoring ratio 122 to be distributed based on the predicted speed 118 and the mapping relationship 120. For example, the control unit 104 may search the mapping relationship 120 for a plurality of sets of torque vectoring ratios and corresponding energy consumptions corresponding to the predicted speed 118 and determine the torque vectoring ratio with the minimum energy consumption as the target torque vectoring ratio 122. The control unit 104 may then distribute torque to two drive axles (e.g., the rear axle 106 and the middle axle 108) based on the target torque vectoring ratio 122 to drive the vehicle 102.

In this way, the torque vectoring ratio can be dynamically determined for a particular scenario having a fixed route, thereby reducing the energy consumption of the vehicle in that particular scenario, which can reduce operating costs, increase operating efficiency, and reduce charging times.

In some examples, when determining the predicted speed of the vehicle, the control unit may acquire the speed of the vehicle, the weight of the vehicle, the grade of the vehicle's location, and the requested torque. The control unit may then determine a predicted speed for the vehicle based on the vehicle's speed, weight, grade, requested torque, the vehicle's location, the location of the destination, and route information. In some examples, the weight of the vehicle may be the actual weight of the vehicle, which comprises the weight of the vehicle itself and the actual load weight.

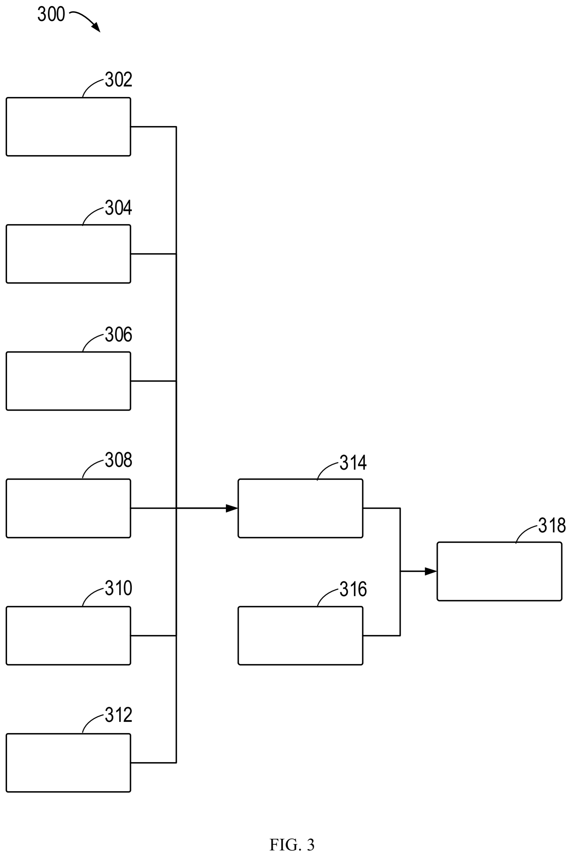

FIG. 3 shows a schematic diagram of an example 300 of determining a torque vectoring ratio in consideration of vehicle weight, grade, and requested torque according to some examples of the present disclosure. As shown in FIG. 3, in example 300, a control unit (e.g., control unit 104 in FIG. 1) can acquire vehicle weight 302, road grade 304, requested torque 306, the vehicle's current location 308, the destination location 310, and route information 312 and determine a predicted speed 314 of the vehicle based on this information, where the vehicle's current location 308, destination location 310, and route information 312 can be, e.g., the vehicle's current location 112, the destination location 114, and the route information 116 in FIG. 1.

In some examples, the vehicle weight 302 may be the weight of the vehicle itself (i.e., the empty vehicle weight). For example, the control unit may read the pre-stored weight of the vehicle itself from the memory. Because sensors or algorithms for determining or estimating the actual load of the vehicle are not present in some low-cost vehicles, considering only the weight of the vehicle itself can improve the versatility of the solution.

In some examples, the vehicle weight 302 may comprise the weight of the vehicle itself and the actual load weight. In some examples, the control unit may utilize sensors installed in the wheels or suspension system to monitor tire pressure and deformation in real time, thereby estimating the actual load weight. In some examples, the control unit can estimate the actual load weight by monitoring changes in vehicle acceleration or deceleration in combination with the vehicle's power output. In some examples, the control unit may use a machine learning model combined with data from a plurality of sensors to predict the actual load weight of the current vehicle, and the machine learning model may be trained to improve the accuracy of the predicted actual load weight. In this way, the vehicle weight 302 is closer to the actual weight of the vehicle, thereby improving the accuracy of the determined predicted speed 314.

In example 300, the control unit may utilize sensors such as an accelerometer, gyroscope, or global positioning system to acquire the grade 304. For example, the control unit may utilize an accelerometer or gyroscope to measure the tilt angle of the vehicle in real time to estimate the grade 304 based on the longitudinal and lateral tilts of the vehicle. As another example, the control unit may utilize a high-precision global positioning system receiver to acquire the geographic location and altitude change of the vehicle and then estimate the grade 304 by analyzing the altitude difference between adjacent locations. In addition, the control unit may also acquire map data and obtain pre-marked grade information based on the current location of the vehicle and the map data.

In example 300, after determining the predicted speed 314, the control unit may acquire a mapping relationship 316 (e.g., the mapping relationship 120 in FIG. 1) of torque vectoring to energy consumption and determine a target torque vectoring ratio 318 based on the predicted speed 314 and the mapping relationship 316.

In this way, since vehicle weight and the grade of the road directly affect the acceleration ability of the vehicle and requested torque reflects the current power demand, additional consideration of these factors when predicting vehicle speed can improve the accuracy of the predicted speed, thereby better reducing energy consumption.

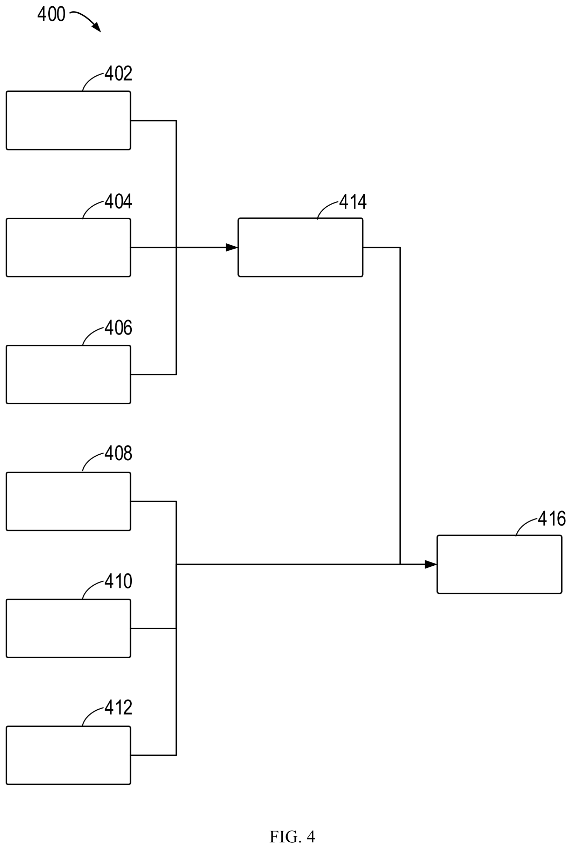

In some examples, the control unit may determine a first speed of the vehicle based on the speed of the vehicle, the weight, the road grade, and the requested torque. The control unit may then adjust the first speed using the location of the vehicle, the destination location, and the route information to determine the predicted speed. FIG. 4 shows a schematic diagram of an example 400 of determining a predicted speed of a vehicle based on vehicle weight, grade, requested torque, current location, route information, and destination location according to some examples of the present disclosure.

As shown in FIG. 4, in example 400, the control unit may acquire the vehicle weight 402, road grade 404, requested torque 406, current location 408, destination location 410, and route information 412. The control unit may then calculate the speed 414 of the vehicle based on the vehicle weight 402, the grade 404, and the requested torque 406. For example, the control unit may calculate the gravity component due to the grade 404 based on the vehicle weight 402, the acceleration due to gravity, and the grade 404. The control unit may then calculate a vector sum of all forces acting on the vehicle based on the calculated gravity component, the requested torque 406, and the radius of the drive wheels. The control unit may then calculate the acceleration of the vehicle based on the vector sum of all forces and the vehicle weight 402. The control unit may then calculate the speed 414 using the calculated acceleration and a basic kinematic formula.

After determining the speed 414, the control unit may adjust the speed 414 using the vehicle's current location 408, the destination location 410, and the route information 412 so that the predicted speed 416 can be determined. In some examples, the control unit may adjust the speed 414 by analyzing critical points in the route information 412, such as intersections, traffic lights, speed bumps, and sharp turns. For example, the control unit may monitor the status of traffic lights, and if the vehicle is approaching a red light or a flashing light, the control unit may reduce the speed 414 appropriately. As another example, if the vehicle is approaching a speed bump, the control unit may also appropriately reduce the speed 414. As another example, when the control unit determines that the current location 408 of the vehicle is less than a predetermined distance threshold from the destination location 410, it may be predicted that the vehicle will decelerate. Thus, it may reduce the speed 414.

In this way, the control unit can first calculate the speed with higher accuracy based on the data from the sensors and a kinematic formula, and then dynamically adjust the speed according to the vehicle's current location, destination location, and route information, thereby improving the accuracy of the predicted speed and reducing energy consumption.

In some examples, the control unit may acquire the vehicle's speed and requested torque. The control unit may then determine the predicted speed of the vehicle based on the location of the vehicle, the destination location, and the route information from the location of the vehicle to the destination location after determining that the speed of the vehicle and the requested torque satisfy predetermined conditions. In some examples, the control unit may determine that the speed of the vehicle and the requested torque satisfy the predetermined conditions by determining that the speed is greater than a first predetermined speed threshold or the requested torque is greater than a first predetermined torque threshold.

In some examples, the control unit may determine that the current gear of the vehicle is a drive gear and the vehicle is in a braking mode after determining that the speed of the vehicle and the requested torque do not satisfy the predetermined conditions. The control unit may then distribute the requested torque equally to the first and second drive axles.

In some examples, the control unit may acquire the weight of the vehicle and the grade of the vehicle's location after determining that the vehicle's speed and the requested torque do not satisfy the predetermined conditions. The control unit may then determine the target torque vectoring ratio based on the weight of the vehicle, the road grade, the speed of the vehicle, and the requested torque.

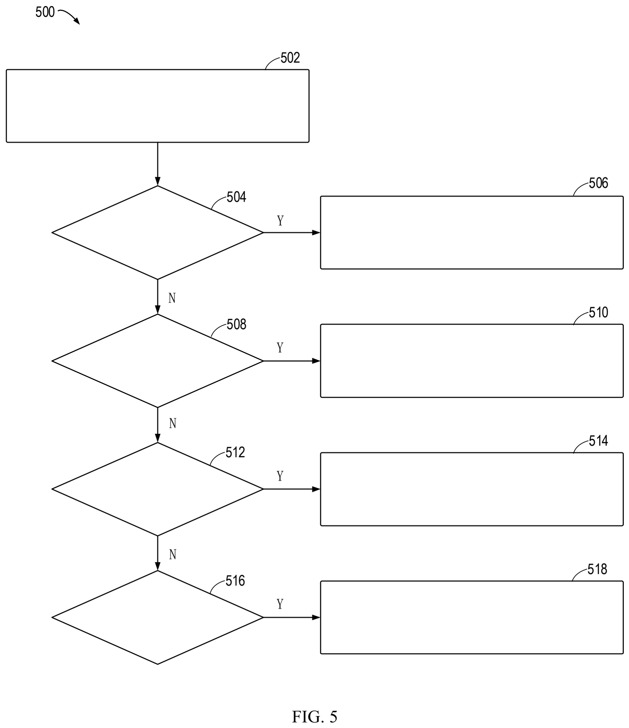

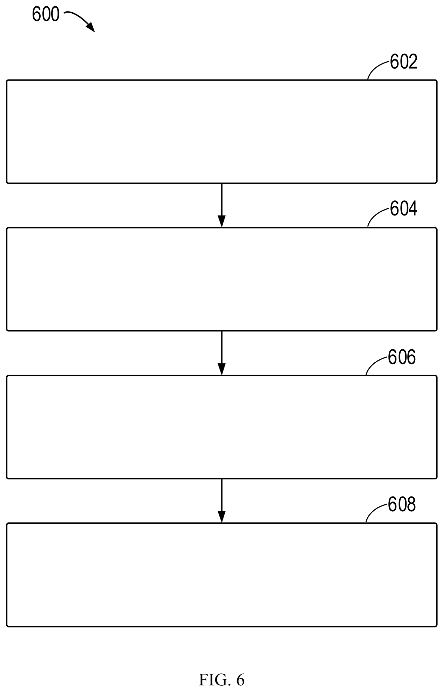

FIG. 5 shows a flow chart of an example process 500 of adopting different torque vectoring strategies for various situations according to some examples of the present disclosure. As shown in FIG. 5, in block 502, the control unit may acquire the speed of the vehicle and the requested torque. In block 504, the control unit may determine whether the speed of the vehicle is greater than a first predetermined speed threshold V1 and whether the requested torque is greater than a first predetermined torque threshold TQ1. If the speed of the vehicle is greater than the first predetermined speed threshold V1 or the requested torque is greater than the first predetermined torque threshold TQ1, the process 500 proceeds to block 506. In block 506, the control unit of the vehicle can perform a dynamic torque vectoring strategy based on the location of the vehicle, the location of a destination, and route information from the location of the vehicle to the location of the destination. The process of performing the dynamic torque vectoring strategy will be described below in connection with FIG. 6.

Returning to block 504, if the speed of the vehicle is not greater than the first predetermined speed threshold V1 and the requested torque is not greater than the first predetermined torque threshold TQ1, the process 500 proceeds to block 508. In block 508, the control unit may determine whether the current gear of the vehicle is a drive gear and whether the requested torque is less than zero. If the current gear of the vehicle is a drive gear and the requested torque is less than zero, the control unit may determine that the vehicle is currently in a braking mode and the process 500 proceeds to block 510. In block 510, since the vehicle is currently in a braking mode, the control unit may evenly distribute the torques of the two drive axles, i.e., the target torque vectoring ratio is 1:1. In this way, both drive axles can start braking energy recovery, thereby recovering more energy.

Returning to block 508, if the requested torque for the vehicle is greater than zero, the vehicle is not in a braking mode and the process 500 proceeds to block 512. In block 512, the control unit may acquire the weight of the vehicle, the road grade, and the speed of the vehicle. If the weight of the vehicle is less than a predetermined weight threshold M1, the grade of the road is less than a first predetermined grade threshold S1, the grade of the road is uphill, the speed of the vehicle is less than a second predetermined speed threshold V2, and the requested torque is less than a second predetermined torque threshold TQ2, the process 500 proceeds to block 514. In block 514, the control unit may set the target torque vectoring ratio to single-axle drive by the rear axle. Since the center of gravity of the vehicle is moved backward when going uphill, single-axle drive by the rear axle can improve driving efficiency and reduce vehicle slippage.

Returning to block 512, if the conditions in block 512 are not met, the process 500 proceeds to block 516. In block 516, if the weight of the vehicle is less than a predetermined weight threshold M1, the grade of the road is less than a second predetermined grade threshold S2, the grade of the road is downhill, the speed of the vehicle is less than a second predetermined speed threshold V2, and the requested torque is less than a second predetermined torque threshold TQ2, the process 500 proceeds to block 518. In block 518, the control unit may set the target torque vectoring ratio to single-axle drive by the middle axle. Since the center of gravity of the vehicle is moved forward when going downhill, single-axle drive by the middle axle can improve driving efficiency and reduce vehicle slippage.

FIG. 6 shows a flow chart of an example process 600 for performing a dynamic torque vectoring strategy according to some examples of the present disclosure. As shown in FIG. 6, in block 602, the control unit may acquire the vehicle's weight, the road grade, the requested torque, the vehicle's location, the destination location, and route information. For example, the control unit may determine the weight of the vehicle itself and the actual load weight to determine the vehicle's weight.

In block 604, the control unit may then determine a predicted speed for the vehicle based on the vehicle's weight, road grade, requested torque, the vehicle's location, the location of the destination, and route information. For example, the control unit may calculate the vehicle's speed based on the vehicle's weight, the road grade, and the requested torque and then adjust the calculated speed using the vehicle's location, the destination location, and the route information to determine the vehicle's predicted speed.

In block 606, the control unit may acquire a pre-calibrated mapping relationship between torque vectoring and energy consumption. For example, the mapping relationship may be a dual drive axle energy consumption test table, which may comprise a plurality of entries, each of which may comprise a requested torque, a vehicle speed, a torque vectoring ratio for two drive axles, and energy consumption. In this way, in the dual drive axle energy consumption test table, a plurality of sets of torque vectoring ratios and corresponding energy consumptions can be found based on the requested torque and speed.

In block 608, the control unit can then determine a target torque vectoring ratio based on the predicted speed and the mapping relationship. For example, the control unit may search the mapping relationship between torque vectoring and energy consumption for a plurality of sets of torque vectoring ratios and corresponding energy consumptions corresponding to the determined predicted speed and determine the torque vectoring ratio with the minimum energy consumption as the target torque vectoring ratio.

In this way, the control unit may adopt corresponding torque distribution strategies for different vehicle driving states (e.g., uphill, downhill, braking mode, normal driving mode, etc.), thereby improving the accuracy of torque vectoring, reducing energy consumption, and reducing charging times.

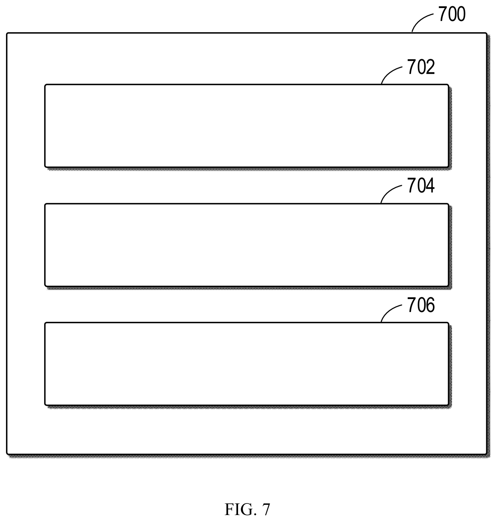

FIG. 7 shows a block diagram of an apparatus 700 for torque vectoring of a vehicle according to some examples of the present disclosure. As shown in FIG. 7, the apparatus 700 comprises a route information usage unit 702 configured to determine a predicted speed of the vehicle based on the location of the vehicle, the location of a destination, and route information from the location of the vehicle to the location of the destination. The apparatus 700 further comprises a mapping relationship acquisition unit 704 configured to acquire a pre-calibrated mapping relationship between torque vectoring and energy consumption, where the mapping relationship indicates a plurality of torque vectoring ratios of a first drive axle and a second drive axle at a given speed and a plurality of energy consumptions corresponding to the plurality of torque vectoring ratios. In addition, the apparatus 700 further comprises a torque vectoring determination unit 706 configured to determine a target torque vectoring ratio between the first drive axle and the second drive axle of the vehicle based on the predicted speed and the mapping relationship.

In some examples, the route information usage unit 702 comprises: a vehicle parameter acquisition unit configured to acquire the speed of the vehicle, the weight of the vehicle, the grade of the location of the vehicle, and the requested torque; and a vehicle parameter usage unit configured to determine the predicted speed of the vehicle based on the speed, the weight, the grade, the requested torque, the location of the vehicle, the destination location, and the route information.

In some examples, the weight is the actual weight of the vehicle, the actual weight comprising the weight of the vehicle itself and the actual load weight.

In some examples, the vehicle parameter usage unit comprises: a first speed determination unit configured to determine a first speed of the vehicle based on the speed, the weight, the grade, and the requested torque; and a first speed adjustment unit configured to adjust the first speed using the location of the vehicle, the destination location, and the route information to determine the predicted speed.

In some examples, the route information usage unit 702 comprises: a speed and torque acquisition unit configured to acquire the speed and requested torque of the vehicle; a first predetermined condition judgment unit configured to determine whether the speed and the requested torque satisfy predetermined conditions; and a dynamic strategy execution unit configured to determine the predicted speed of the vehicle based on the location of the vehicle, the destination location, and the route information from the location of the vehicle to the destination location.

In some examples, the first predetermined condition judgment unit comprises: a speed and torque comparison unit configured to determine that the speed is greater than a first predetermined speed threshold or that the requested torque is greater than a first predetermined torque threshold.

In some examples, the apparatus 700 further comprises: a second predetermined condition judgment unit configured to determine that the speed and the requested torque do not satisfy the predetermined conditions; a braking mode determination unit configured to determine that the current gear of the vehicle is a drive gear and the vehicle is in a braking mode; and a braking mode vectoring unit configured to evenly distribute the requested torque to the first drive axle and the second drive axle.

In some examples, the apparatus 700 further comprises: a third predetermined condition judgment unit configured to determine that the speed and the requested torque do not satisfy the predetermined conditions; a grade acquisition unit configured to acquire the weight of the vehicle and the grade of the location of the vehicle; and a grade usage unit configured to determine the target torque vectoring ratio based on the weight, the grade, the speed, and the requested torque.

In some examples, the vehicle parameter usage unit comprises: an uphill determination unit confirmed to determine that the weight is less than a predetermined weight threshold, the grade is less than a first predetermined grade threshold, the grade indicates the vehicle is traveling uphill, the speed is less than a second predetermined speed threshold, and the requested torque is less than a second predetermined torque threshold; and an uphill vectoring unit configured to determine the target torque vectoring ratio so that the first drive axle performs single-axle drive.

In some examples, the vehicle parameter usage unit comprises: a downhill determination unit confirmed to determine that the weight is less than a predetermined weight threshold, the grade is less than a second predetermined grade threshold, the grade indicates the vehicle is traveling downhill, the speed is less than a second predetermined speed threshold, and the requested torque is less than a second predetermined torque threshold; and a downhill vectoring unit configured to determine the target torque vectoring ratio so that the second drive axle performs single-axle drive.

It should be understood that by utilizing the device 700 of the present disclosure, at least one of a number of advantages that are capable of being implemented by the method or process as described above can be implemented. In this way, the torque vectoring ratio can be dynamically determined for a particular scenario having a fixed route, thereby reducing the energy consumption of the vehicle in that particular scenario, which can reduce operating costs, increase operating efficiency, and reduce charging times.

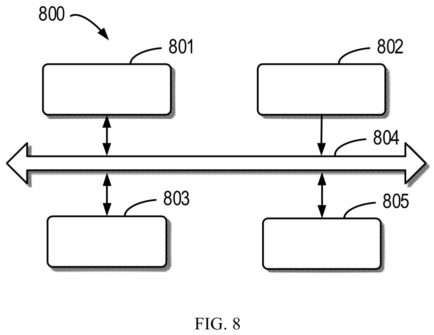

FIG. 8 shows a block diagram of a controller 800 that may implement a plurality of examples of the present disclosure. The controller 800, e.g., may be the control unit 104 as shown in FIG. 1. As shown in the figure, the controller 800 comprises a processor 801, which can perform various appropriate actions and processes according to computer program instructions stored in a read-only memory (ROM) 802 and loaded into a random-access memory (RAM) 803. Various programs and data required for the operation of the controller 800 may also be stored in the RAM 803. The processor 801, the ROM 802, and the RAM 803 are interconnected through a bus 804. An input/output (I/O) interface 805 is also connected to the bus 804.

The processor 801 can be various general-purpose and/or special-purpose processing components with processing and computing capabilities. Examples of the processor 801 comprise, but are not limited to, central processing units (CPU), graphics processing units (GPU), various dedicated artificial intelligence (AI) computing chips, various computing units running machine learning model algorithms, digital signal processors (DSP), and any appropriate processors, controllers, microcontrollers, etc. The processor 801 performs various methods and processes described above, such as the method 200. For example, in some examples, the method 200 can be implemented as a computer software program tangibly contained in a machine-readable medium. In some examples, part or all of the computer programs may be loaded and/or installed onto the controller 800 through the ROM 802. When the computer program is loaded into the RAM 803 and executed by the processor 801, one or more steps of the method 200 described above can be performed. Alternatively, in other examples, the processor 801 can be configured to perform method 200 by any other suitable means (e.g., by means of firmware).

The functions described above herein can be performed, at least in part, by one or more hardware logic components. For example, and without limitation, exemplary types of hardware logic components that can be used comprise: Field Programmable Gate Arrays (FPGA), Application Specific Integrated Circuits (ASIC), Application Specific Standard Products (ASSP), System on a Chip (SOC), Complex Programmable Logic Devices (CPLD), and the like.

The program code for implementing the methods of the present disclosure can be written in any combination of one or more programming languages. This program code can be provided to a processor or controller of a general-purpose computer, special-purpose computer, or other programmable data processing devices such that the program code, when executed by the processor or controller, causes the functions/operations specified in the flowcharts and/or block diagrams to be implemented. The program code can be executed entirely on the machine, partly on the machine, as a stand-alone software package partly on the machine and partly on a remote machine, or entirely on a remote machine or server.

In the context of the present disclosure, a machine-readable medium can be a tangible medium that can contain or store programs for use by or in conjunction with an instruction execution system, apparatus, or device. A machine-readable medium can be a machine-readable signal medium or a machine-readable storage medium. The machine-readable medium can comprise, but is not limited to, electronic, magnetic, optical, electromagnetic, infrared, or semiconductor systems, apparatuses, or devices, or any suitable combination of the foregoing. More specific examples of the machine-readable storage medium would comprise electrical connections based on one or more wires, portable computer disks, hard disks, random access memory (RAM), read-only memory (ROM), erasable programmable read-only memory (EPROM or Flash memory), optical fibers, portable compact disc read-only memory (CD-ROM), optical storage devices, magnetic storage devices, or any suitable combination of the foregoing. Furthermore, although operations have been depicted in a specific order, it should be understood that such operations are not required to be performed in the specific order shown or in sequential order, nor are all illustrated operations required to be performed to achieve the desired results. In certain contexts, multitasking and parallel processing may be advantageous. Similarly, although several specific implementation details are included in the above discussion, these should not be construed as limiting the scope of the present disclosure. Certain features described in the context of separate examples can also be implemented in combination in a single implementation. Conversely, various features described in the context of a single implementation can also be implemented separately or in any suitable sub-combination in multiple implementations.

Although the subject matter has been described in language specific to structural features and/or methodological acts, it is to be understood that the subject matter defined in the appended Claims is not necessarily limited to the specific features or acts described above. Rather, the specific features and operations described above are merely exemplary forms of implementing the Claims.

## Claims

1. A method (200) for torque vectoring of a vehicle, the vehicle comprising a first drive axle and a second drive axle, the first drive axle being closer to the rear of the vehicle than the second drive axle, and the method comprising:
determining (202) a predicted speed of the vehicle based on the location of the vehicle, the location of a destination, and route information from the location of the vehicle to the location of the destination;
acquiring (204) a pre-calibrated mapping relationship between torque vectoring and energy consumption, where the mapping relationship indicates a plurality of torque vectoring ratios of a first drive axle and a second drive axle at a given speed and a plurality of energy consumptions corresponding to the plurality of torque vectoring ratios; and
determining (206) a target torque vectoring ratio between the first drive axle and the second drive axle of the vehicle based on the predicted speed and the mapping relationship.

2. The method (200) according to Claim 1, wherein determining (202) the predicted speed of the vehicle based on the location of the vehicle, the location of a destination, and route information from the location of the vehicle to the location of the destination comprises:
acquiring the speed of the vehicle, the weight of the vehicle, the grade of the vehicle's location, and the requested torque; and
determining the predicted speed of the vehicle based on the speed, the weight, the grade, the requested torque, the location of the vehicle, the location of the destination, and the route information.

3. The method (200) according to Claim 2, wherein the weight is the actual weight of the vehicle, the actual weight comprising the weight of the vehicle itself and the actual load weight.

4. The method (200) according to Claim 2, wherein determining the predicted speed of the vehicle based on the speed, the weight, the grade, the requested torque, the location of the vehicle, the location of the destination, and the route information comprises:
determining a first speed of the vehicle based on the speed, the weight, the grade, and the requested torque; and
adjusting the first speed with the location of the vehicle, the location of the destination, and the route information to determine the predicted speed.

5. The method (200) according to Claim 1, wherein determining (202) the predicted speed of the vehicle based on the location of the vehicle, the location of a destination, and route information from the location of the vehicle to the location of the destination comprises:
acquiring a speed and a requested torque of the vehicle;
determining that the speed and the requested torque satisfy predetermined conditions; and
determining the predicted speed of the vehicle based on the location of the vehicle, the location of a destination, and route information from the location of the vehicle to the location of the destination.

6. The method (200) according to Claim 5, wherein determining that the speed and the requested torque satisfy the predetermined conditions comprises:
determining that the speed is greater than a first predetermined speed threshold or that the requested torque is greater than a first predetermined torque threshold.

7. The method (200) according to Claim 5, further comprising:
determining that the speed and the requested torque do not satisfy the predetermined conditions;
determining that the current gear of the vehicle is a drive gear and that the vehicle is in a braking mode; and
distributing the requested torque evenly to the first drive axle and the second drive axle.

8. The method (200) according to Claim 5, further comprising:
determining that the speed and the requested torque do not satisfy the predetermined conditions;
acquiring the weight of the vehicle and the grade of the vehicle's location; and
determining the target torque vectoring ratio of the vehicle based on the weight, the grade, the speed, and the requested torque.

9. The method according to Claim 8 (200), wherein determining the target torque vectoring ratio of the vehicle based on the weight, the grade, the speed, and the requested torque comprises:
determining that the weight is less than a predetermined weight threshold, the grade is less than a first predetermined grade threshold, the grade indicates the vehicle is traveling uphill, the speed is less than a second predetermined speed threshold, and the requested torque is less than a second predetermined torque threshold; and
determining the target torque vectoring ratio so that the first drive axle performs single-axle drive.

10. The method (200) according to Claim 8, wherein determining the target torque vectoring ratio of the vehicle based on the weight, the grade, the speed, and the requested torque comprises:
determining that the weight is less than a predetermined weight threshold, the grade is less than a second predetermined grade threshold, the grade indicates the vehicle is traveling downhill, the speed is less than a second predetermined speed threshold, and the requested torque is less than a second predetermined torque threshold; and
determining the target torque vectoring ratio so that the second drive axle performs single-axle drive.

11. An apparatus (700) for torque vectoring of a vehicle, the vehicle comprising a first drive axle and a second drive axle, the first drive axle being closer to the rear of the vehicle than the second drive axle, and the apparatus (700) comprising:
a route information usage unit (702) configured to determine a predicted speed of the vehicle based on the location of the vehicle, the location of a destination, and route information from the location of the vehicle to the location of the destination;
a mapping relationship acquisition unit (704) configured to acquire a pre-calibrated mapping relationship between torque vectoring and energy consumption, where the mapping relationship indicates a plurality of torque vectoring ratios of a first drive axle and a second drive axle at a given speed and a plurality of energy consumptions corresponding to the plurality of torque vectoring ratios; and
a torque vectoring determination unit (706) configured to determine a target torque vectoring ratio between the first drive axle and the second drive axle of the vehicle based on the predicted speed and the mapping relationship.

12. A controller (800), comprising:
at least one processor (801); and
a memory (802) coupled to the at least one processor and having instructions stored thereon, the instructions, when executed by the at least one processor (801), causing the controller (800) to perform the method according to any one of Claims 1-10.

13. A computer program product, the computer program product being tangibly stored on a non-transitory computer-readable medium and comprising machine-executable instructions, the machine-executable instructions, when executed, causing a machine to implement the method (200) according to any one of Claims 1-10.

14. A vehicle, comprising:
a first drive axle;
a second drive axle, the first drive axle being closer to the rear of the vehicle than the second drive axle; and
the controller (800) according to Claim 12.
